# EUROPEAN PATENT APPLICATION

(11) **EP 4 772 405 A1**
(43) Date of publication of application: **08.07.2026**
(21) Application number: 24884645.3
(22) Date of filing: 28.10.2024
(51) Int. Cl.: B60R 16/023, B60R 25/20

(54) **AUTOMOTIVE HEAD UNIT SCREEN CONTROL METHOD AND RELATED APPARATUS**

(30) Priority: 31.10.2023 CN 202311435126
(71) Applicant: Great Wall Motor Company Limited, Baoding, Hebei 071000 (CN)
(72) Inventor: HU, Xinnan, Baoding, Hebei 071000 (CN); MA, Zihang, Baoding, Hebei 071000 (CN); WEI, Ning, Baoding, Hebei 071000 (CN)
(74) Representative: Klunker IP Patentanwälte PartG mbB
(86) International application number: PCT/CN2024/127660
(87) International publication number: WO 2025/092642

(57) **Abstract**

Disclosed are an automotive head unit screen control method and a related apparatus, applicable in the field of vehicle control. The method comprises: a head unit detecting the reception status of remote signals and a brake signal; when the head unit receives a remote signal containing a start command and does not receive the brake signal, controlling an automotive head unit screen to remain in an off state; and when the head unit receives a remote signal without any start command and the brake signal, controlling the automotive head unit screen to enter an on state. Thus, by utilizing the preexisting brake signal and the preexisting remote signals issued by a wireless control module, it is possible to quickly determine whether the automotive head unit screen needs to remain off, thereby reducing the occurrence of problems such as flickering of the head unit screen during remote start-up.

## Description

This application claims the priority to Chinese Patent Application No. 202311435126.7, titled "AUTOMOTIVE HEAD UNIT SCREEN CONTROL METHOD AND RELATED APPARATUS", filed on October 31, 2023 with the China National Intellectual Property Administration, which is incorporated herein by reference in its entirety.

### FIELD

The present disclosure relates to the technical field of vehicle control, and in particular to a method and an apparatus for controlling a head unit screen of a vehicle.

### BACKGROUND

With the development of vehicle-related technologies, more and more vehicles support remote start functions. When users remotely start a vehicle but do not need to use a head unit screen of the vehicle, they generally prefer the head unit screen to remain unlit during the remote start.

During the start process of the vehicle, a power mode is first switched from OFF to CRANK, and then to ON. The CRANK mode corresponds to a start process of an engine or a motor of the vehicle. In the startup process, an IG relay is pulled in to start supplying power to the vehicle. Currently, during the remote start process, logical processing of a remote start signal Remotemodsts and that of a power mode signal Syspowermod are typically triggered simultaneously, and it is determined whether to keep the head unit screen unlit through identifying the remote signal. However, due to inconsistency in bus signal periods of the remote signal and the power mode signal, the logical processing and signal update time of the remote signal may be later than those of the power mode signal, resulting in abnormal situations during the start process, such as flickering of the head unit screen, which not only affects user experience but also may cause damage to electronic devices and a control system of the vehicle.

Therefore, how to deal with flickering of the head unit screen and other abnormal situations during the remote start is an issue to be addressed.

### SUMMARY

In view of the above issue, a method and an apparatus for controlling a head unit screen of a vehicle are provided in the present disclosure, to address flickering of the head unit screen and like abnormal situations occurring when the vehicle is remotely started.

The following technical solutions are provided according to embodiments of the present disclosure.

In a first aspect, a method for controlling a head unit screen of a vehicle is provided in an embodiment of the present disclosure. The method includes:
detecting, by a head unit, reception of a remote signal and a brake signal, where the brake signal is generated when pressure is applied to a brake pedal and a time instant when the remote signal is received is earlier than a time instant when an ignition signal is generated; and
controlling, in response to the head unit receiving the remote signal carrying a start command and receiving no brake signal, the head unit screen of the vehicle to remain in an off state, and controlling, in response to the head unit receiving the remote signal carrying no command and receiving the brake signal, the head unit screen of the vehicle to switch to an on state.

In an embodiment, the controlling, in response to the head unit receiving the remote signal carrying no command and receiving the brake signal, the head unit screen of the vehicle to switch to an on state includes:
outputting to the head unit screen, in response to the head unit receiving the remote signal carrying no command and receiving the brake signal, a signal for turning on the head unit screen to control the head unit screen of the vehicle to switch to the on state.

In an embodiment, after the controlling, in response to the head unit receiving the remote signal carrying a start command and receiving no brake signal, the head unit screen of the vehicle to remain in an off state, the method further includes:
controlling, in response to the head unit receiving the brake signal, the head unit screen of the vehicle to switch to the on state.

In an embodiment, the method further includes:
sending, by a central electronic module, the ignition signal to the head unit in response to the received brake signal or the received remote signal carrying the start command, where the ignition signal is for lighting up the head unit screen in the on state.

In an embodiment, after the central electronic module receives the brake signal and before the central electronic module sends the ignition signal to the head unit, the method further includes:
acquiring, by the central electronic module, a distance between the vehicle and a key of the vehicle.

The sending, by a central electronic module, an ignition signal to the head unit in response to the central electronic module receiving the brake signal or the remote signal carrying the start command includes:
in response to the brake signal, sending, by the central electronic module, the ignition signal to the head unit in response to the distance between the vehicle and the key of the vehicle being less than a preset distance.

In an embodiment, the acquiring, by the central electronic module, a distance between the vehicle and a key of the vehicle includes:
receiving, by the central electronic module, a wireless signal from the key of the vehicle; and
determining, by the central electronic module, the distance between the vehicle and the key of the vehicle based on the wireless signal.

In a second aspect, an apparatus for controlling a head unit screen of a vehicle is provided in an embodiment of the present disclosure. The apparatus includes a detection module and a control module that are applied to a head unit.

The detection module is configured to detect reception of a remote signal and a brake signal. The brake signal is generated when pressure is applied to a brake pedal. A time instant when the remote signal is received is earlier than a time instant when an ignition signal is generated.

The control module is configured to control, in response to receiving the remote signal carrying a start command and receiving no brake signal, the head unit screen of the vehicle to remain in an off state, and control, in response to receiving the remote signal carrying no command and receiving the brake signal, the head unit screen of the vehicle to switch to an on state.

In an embodiment, the control module is configured to, in response to receiving the remote signal carrying no command and receiving the brake signal:
output a signal for turning on the head unit screen to the head unit screen, to control the head unit screen to switch to the on state.

In an embodiment, the control unit is further configured to:
control, in response to a first reception module receiving the brake signal after the head unit screen of the vehicle is controlled to remain in the off state, the head unit screen of the vehicle to switch to the on state.

In a third aspect, a vehicle is provided in an embodiment of the present disclosure. The method for controlling a head unit screen of a vehicle according to any embodiment of the first aspect is applied to the vehicle.

Compared with the prior art, beneficial effects of the present disclosure are described as follows.

A method for controlling a head unit screen of a vehicle is provided in embodiments of the present disclosure. In the method, a head unit first detects reception of a remote signal and a brake signal. The brake signal is generated when pressure is applied to a brake pedal. A time instant when the remote signal is received is earlier than a time instant when an ignition signal is generated. Then, the head unit controls, in response to receiving the remote signal carrying a start command and receiving no brake signal, the head unit screen of the vehicle to remain in an off state, and controls, in response to receiving the remote signal carrying no command and receiving the brake signal, the head unit screen of the vehicle to switch to an on state. In the embodiments of the present disclosure, by utilizing the brake signal and the remote signal that are received earlier than the generation of the ignition signal, it can be quickly determined whether to control the head unit screen of the vehicle to remain in the off state and perform corresponding control. Therefore, on one hand, in scenarios where the head unit screen of the vehicle is required to remain in the off state, issues during a remote start process, flickering of the head unit screen and like issues during a remote start process, caused by update time of a Remote signal being later than that of a CRANK signal resulted from different bus signal periods of the remote start signal Remotemodsts=0X1:Remote and the power mode signal Syspowermod=CRANK that are simultaneously triggered, can be prevented, avoiding damage to electronic devices of the vehicle. On the other hand, in scenarios where it is desirable to control the head unit screen of the vehicle to switch to the on state, the head unit screen of the vehicle can be controlled to switch to the on state before the Remote signal is received, thereby reducing the startup time of the head unit screen and improving user experience.

Other features and advantages of the embodiments of the present disclosure are described in detail in the subsequent section

### BRIEF DESCRIPTION OF THE DRAWINGS

In order to more clearly illustrate technical solutions in embodiments of the present disclosure or in the prior art, drawings to be used in the description of the embodiments or the prior art are briefly described below. Apparently, the drawings in the following description show only some embodiments of the present disclosure, and other drawings may be obtained by those skilled in the art from the drawings without any creative work.
FIG. 1 is a flowchart of a method for controlling a head unit screen of a vehicle according to an embodiment of the present disclosure;
FIG. 2 is a flowchart of a method for controlling a head unit screen of a vehicle according to another embodiment of the present disclosure; and
FIG. 3 is a schematic diagram of an apparatus for controlling a head unit screen of a vehicle according to an embodiment of the present disclosure.

### DETAILED DESCRIPTION

A method and an apparatus for controlling a head unit screen of a vehicle are provided in embodiments of the present disclosure. Described above are only examples, and are not intended to limit an application field of the method and the apparatus for controlling a head unit screen of a vehicle provided in the present disclosure.

In the specification, the claims and the drawings of the present disclosure, terms such as "first", "second", "third" and "fourth" are merely for distinguishing objects rather than describing a specific order.

In the embodiments of the present disclosure, words "exemplary" and "for example" are merely for describing an example, an illustration, or an explanation. Any embodiment or design described as "exemplary" or "for example" in the embodiments of the present disclosure shall not be interpreted as more preferable or advantageous over other embodiments or designs. Rather, the words such as "exemplary" or "for example" are intended to present relevant concepts in a specific manner.

The terms used for the embodiments of the present disclosure are merely for the purpose of explaining the embodiments of the present disclosure, rather than limiting the present disclosure.

In order to enable those skilled in the art to understand the solutions according to the present disclosure, the technical solutions in the embodiments of the present disclosure are described clearly and completely hereinafter with reference to the drawings in the embodiments of the present disclosure. It is apparent that the embodiments described are only some rather than all the embodiments of the present disclosure. All other embodiments obtained by those ordinary skilled in the art based on the embodiments of the present disclosure without any creative work fall within the protection scope of the present disclosure.

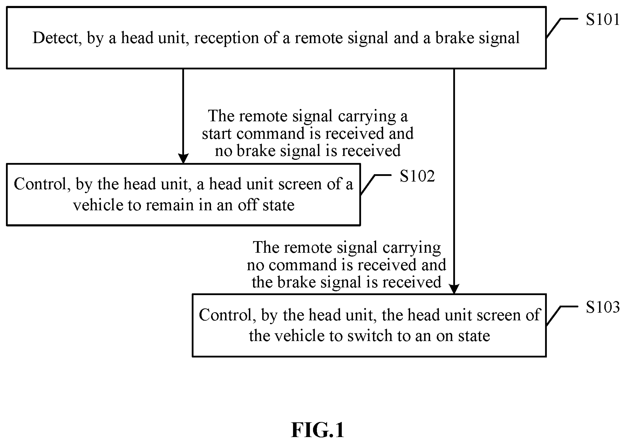

Reference is made to FIG. 1, which is a flowchart of a method for controlling a head unit screen of a vehicle according to an embodiment of the present disclosure. The method is applied to a head unit of the vehicle and includes the following steps S101 to S103.

In step S101, a head unit detects reception of a remote signal and a brake signal.

In an embodiment, the remote signal is received before an ignition signal is generated. In an example, the remote signal may be a T_BOX_RemtEngCtrl signal issued by a wireless control module T_BOX of the vehicle, and may include: a remote signal carrying a start command T_BOX_RemtEngCtrl=Start and a remote signal carrying no command T_BOX_RemtEngCtrl=NO Action. The brake signal is generated when pressure is applied to a brake pedal, for example, a BrkPedalSts_BCM=0X1:ON signal generated when the brake pedal is depressed.

In an example, the remote signal may be the T_BOX_RemtEngCtrl signal issued by the wireless control module T_BOX of the vehicle in response to a remote instruction issued by a user through operating software on a mobile terminal, a key of the vehicle or the like. When no pressure is applied to the brake pedal of the vehicle, there may be a BrkPedalSts_BCM=0X0:OFF signal.

In step S102, the head unit controls, in response to receiving the remote signal carrying the start command and receiving no brake signal, the head unit screen of the vehicle to remain in an off state.

In order to prevent an unexpected situation such as vehicle rollback or lunging, the user who is starting the vehicle from inside typically depresses the brake pedal of the vehicle so that pressure is applied to the brake pedal and a brake signal is generated. If the head unit receives the remote signal carrying the start command and receives no brake signal, it is indicated that the user has initiated a remote start request through, for example, software of a mobile terminal or a key of the vehicle, and the user may be currently far away from the vehicle or temporarily not intend to drive the vehicle and may require the head unit screen not to be lit up. Therefore, the head unit screen of the vehicle may be controlled to remain in an off state. In this situation, a central electronic module CEM of the vehicle performs a process of starting the vehicle, in which after the CEM receives the remote signal carrying the start command, the head unit may receive an ignition signal Syspowermod=CRANK from the CEM approximately 200 milliseconds later, but the head unit of the vehicle does not output a signal for turning on the head unit screen to the head unit screen so that the head unit screen of the vehicle remains in the off state.

In an example, the head unit of the vehicle first acquires a current state of the head unit screen. If the head unit screen is currently in the off state, the head unit does not output the signal for turning on the head unit screen to the head unit screen. If the head unit screen is currently in an on state, the head unit outputs a signal for turning off the head unit screen to the head unit screen so that the head unit screen of the vehicle remains in the off state even when being powered.

In step S103, the head unit controls, in response to receiving the remote signal carrying no command and receiving the brake signal, the head unit screen of the vehicle to switch to the on state.

If the head unit receives the remote signal carrying no command and receives the brake signal, it indicates that pressure has been applied to the brake pedal and the user does not use the remote start function of the vehicle. It can be considered that the user is starting the vehicle from inside and desires to use the head unit screen. Therefore, the head unit screen of the vehicle may be controlled to switch to the on state. In this situation, the central electronic module CEM of the vehicle performs the process of starting the vehicle, in which the head unit of the vehicle may output the signal for turning on the head unit screen to the head unit screen to control the head unit screen of the vehicle to switch to the on state.

In an example, the head unit of the vehicle first acquires the current state of the head unit screen. If the head unit screen is currently in the off state, the head unit outputs the signal for turning on the head unit screen to the head unit screen. If the head unit screen is currently in the on state, the head unit may refrain from outputting the signal for turning off or the signal for turning on the head unit screen to the head unit screen, so that the head unit screen of the vehicle remains in the on state.

In the method for controlling a head unit screen of a vehicle according to the embodiments of the present disclosure, by identifying the remote signal T_BOX_RemtEngCtrl issued by T_BOX and the brake signal BrkPedalSts_BCM=0X1:ON that exist before the power mode signal Syspowermod changes to CRANK, flickering of the head unit screen or like issues during a remote start process, caused by different bus signal periods of the simultaneously triggered remote start signal Remotemodsts=0X1:Remote and the power mode signal Syspowermod=CRANK, can be avoided in scenarios where the head unit screen of the vehicle is required to remain in the off state, avoiding damage to electronic devices of the vehicle. For example, an update period of the power mode signal is 50 milliseconds, while an update period of the remote start signal Remote is 100 milliseconds. As a result, update time of the Remote signal may be later than that of the CRANK signal, causing flickering of the head unit screen during a remote start, which damages electronic devices of the vehicle.

In the embodiments of the present disclosure, by utilizing the remote signal issued by the wireless control module and the brake signal that are received earlier, it can be quickly determined whether to control the head unit screen of the vehicle to remain in the off state and perform corresponding control. Therefore, on one hand, in scenarios where the head unit screen of the vehicle is required to remain in the off state, flickering of the head unit screen and like issues during a remote start process, caused by the update time of the Remote signal being later than that of the CRANK signal, can be prevented, avoiding damage to electronic devices of the vehicle. On the other hand, in scenarios where it is desirable to control the head unit screen of the vehicle to switch to the on state, the head unit screen of the vehicle can be controlled to switch to the on state before the Remote signal is received, thereby reducing the startup time of the head unit screen and improving user experience.

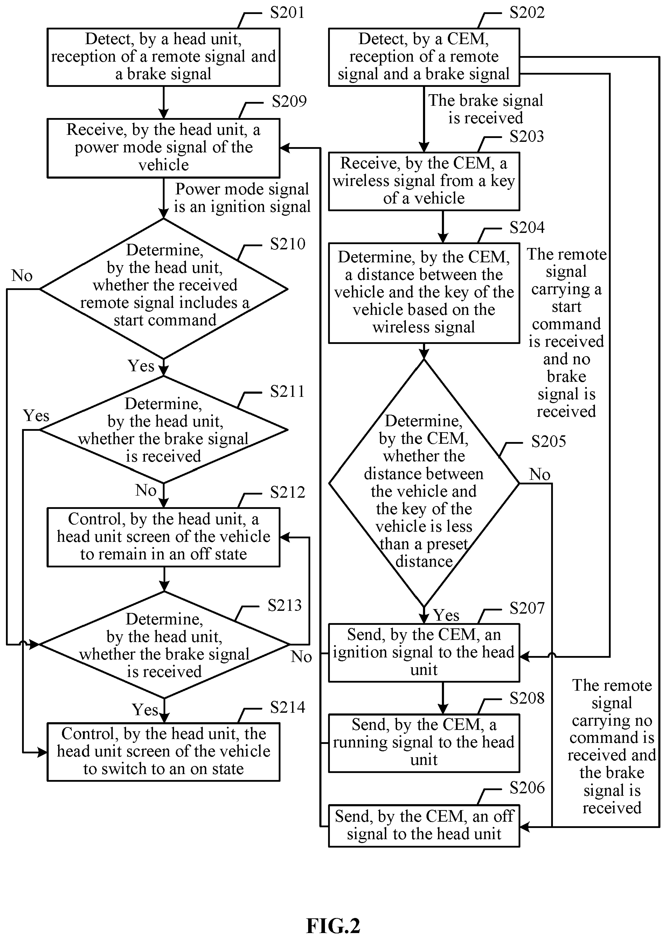

Reference is made to FIG. 2, which is a flowchart of a method for controlling a head unit screen of a vehicle according to another embodiment of the present disclosure. The method includes the following steps S201 to S214.

In step S201, the head unit detects reception of a remote signal and a brake signal.

In an embodiment, a remote signal T_BOX_RemtEngCtrl includes a remote signal carrying a start command T_BOX_RemtEngCtrl=Start and a remote signal carrying no command T_BOX_RemtEngCtrl=NO Action, that are issued by a wireless control module T_BOX of the vehicle. The brake signal is a BrkPedalSts_BCM=0X1:ON signal generated when pressure is applied to a brake pedal, for example, when the brake pedal is depressed.

In step S202, a CEM detects reception of the brake signal and the remote signal. If it is detected that the brake signal is received, step S203 is performed. If it is detected that no brake signal is received and the remote signal carrying the start command is received, step S207 is performed. If it is detected that no brake signal is received and the remote signal carrying no command is received, step S206 is performed.

In an example, step S201 and step S202 may be performed simultaneously or successively. If the brake signal is received, it may be considered that the user is starting the vehicle from inside and depresses the brake pedal, and the CEM may perform step S203 to further determine whether the person who has depressed the brake pedal from inside the vehicle is the user. If the remote signal carrying the start command is received and no brake signal is received, it may be considered that the user desires to remotely start the vehicle by operating software of a mobile terminal, a key of the vehicle or the like and the CEM may perform an ignition process to start an engine and perform step S207.

In step S203, the CEM receives a wireless signal from the key of the vehicle.

In an embodiment, if the brake signal is received, the CEM may further receive the wireless signal from the key of the vehicle, such as a Bluetooth signal or a radio frequency identification signal.

In step S204, the CEM determines a distance between the vehicle and the key of the vehicle based on the wireless signal.

In an embodiment, the CEM determines the distance between the vehicle and the key of the vehicle based on a strength of the received wireless signal, thereby determining whether the user is nearby.

In S205, the CEM determines whether the distance between the vehicle and the key of the vehicle is less than a preset distance. If the distance is less than the preset distance, the CEP performs step S207. If the distance is not less than the preset distance, the CEM performs step S206.

In an example, the preset distance may be determined through setting a minimum strength of the wireless signal. If the strength of the wireless signal is greater than the set minimum strength, it may be considered that the distance between the vehicle and the key of the vehicle is less than the preset distance. Therefore, it may be considered that the key of the vehicle is inside the vehicle and the person who depresses the brake pedal is the user, and the user desires to start the vehicle.

In an embodiment, if the distance between the vehicle and the key of the vehicle is greater than the preset distance, it may be considered that the person who depresses the brake pedal is not the user or the user forgets to carry the key of the vehicle. In this situation, corresponding alarm information may be remotely sent to the mobile terminal of the user and step S210 may be repeated.

In step S206, the CEM sends an off signal to the head unit.

In a case that the vehicle is not started, the power mode signal sent by the CEM to the head unit is an off signal Syspowermod=OFF.

In step S207, the CEM sends an ignition signal to the head unit.

When the CEM attempts to start the vehicle, the vehicle temporarily enters a CRANK mode. In this mode, a power supply of the vehicle provides additional power to ensure that the engine of the vehicle starts successfully, and at this time the power mode signal sent by the CEM to the head unit is an ignition signal Syspowermod=CRANK.

In step S208, the CEM sends a running signal to the head unit.

Upon the successful start of the engine, the vehicle enters a RUN mode. In this mode, all electronic devices and electrical systems of the vehicle operate normally, and the power mode signal sent by the CEM to the head unit is the running signal Syspowermod=ON.

In S209, the head unit receives the power mode signal of the vehicle, and performs step S210 in response to the received power mode signal being the ignition signal.

In an example, the power mode signal may include: the off signal Syspowermod=OFF, the ignition signal Syspowermod=CRANK, and the running signal Syspowermod=ON. The central electronic module (CEM) of the vehicle may switch the power mode from OFF to CRANK and then to ON, thereby starting the vehicle. In addition, the CEM sends the corresponding power mode signals to a bus of the vehicle and the head unit of the vehicle may receive the power mode signals from the bus.

In response to the power mode signal of the vehicle being Syspowermod=CRANK or Syspowermod=ON, the head unit screen of the vehicle is powered. If it is determined based on the remote signal and the brake signal that the head unit screen is expected to be in an on state, the head unit screen is lit up. If it is determined based on the remote signal and the brake signal that the head unit screen is expected to be in an off state, the head unit screen is not lit up.

It can be understood that the head unit may continuously receive the power mode signals of the vehicle. However, during a process in which the vehicle is started in response to the remote signal and/or the brake signal, it takes about 200 milliseconds for the power mode signal to change from Syspowermod=OFF to Syspowermod=CRANK. Therefore, a time instant when the remote signal is received and a time instant when the brake signal is received are earlier than a time instant when the ignition signal in the power mode signal is received.

In step S210, the head unit determines whether the received remote signal includes the start command. If the received remote signal includes the start command, the head unit performs step S211. If the received remote signal does not include the start command, the head unit performs step S213.

In an embodiment, if the received the remote signal carries the start command, it is indicated that the user has initiated a remote start request through, for example, software of a mobile terminal or the key of the vehicle, and the user may be currently far away from the vehicle or temporarily not intend to drive the vehicle and may require the head unit screen not to be lit up.

In step S211, the head unit determines whether the brake signal is received. If the brake signal is received, the head unit performs step S214. If no brake signal is received, the head unit performs step S212.

In an embodiment, if the received remote signal includes the start command, the head unit further determines whether the brake signal is received. If no brake signal is received, it is indicated that the user may be currently far away from the vehicle or temporarily not intend to drive the vehicle, and it may be considered that the user requires the head unit screen not to be lit up. If the brake signal is received, it is indicated that the user may be currently inside the vehicle and require the head unit screen to be lit up.

The execution order of step S210 and step S211 is not limited in the embodiments of the present disclosure. The determination process in step S210 may be performed in response to the determination process in step S211 showing that no brake signal is received; if it is determined in step S210 that the received remote signal includes the start command, step S212 is performed; and if it is determined in step S210 that the received remote signal does not include the start command, step 201 is repeated. Alternatively, the determination process in step S210 and that in step S211 may be performed simultaneously; if it is determined in step S210 that the received remote signal includes the start command and in step S211 that no brake signal is received, step S212 is performed; if it is determined in step S211 that the brake signal is received, step S214 is performed; and if it is determined in step S210 that the received remote signal does not include the start command and in step S211 that no brake signal is received, step S201 is repeated.

In step S212, the head unit controls the head unit screen of the vehicle to remain in the off state.

In step S213, the head unit determines whether the brake signal is received. If the brake signal is received, the head unit performs step S214. If no brake signal is received, the head unit performs step S212.

In an embodiment, the head unit continuously receives the brake signal after the head screen is controlled to remain in the off state. When the brake signal is received, it is indicated that the brake pedal is under pressure that may be applied through depressing by the user. That is, the user may get inside the vehicle after remotely starting the vehicle and may desire to use the head unit screen.

In step S214, the head unit controls the head unit screen of vehicle to switch to the on state.

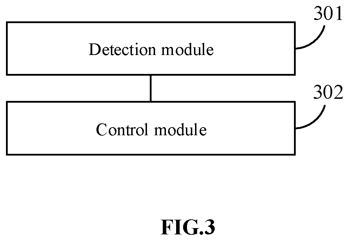

Reference is made to FIG. 3, which is a schematic diagram of an apparatus for controlling a head unit screen of a vehicle according to an embodiment of the present disclosure. The apparatus includes a detection module 301 and a control module 302 that are applied to the head unit.

The detection module 301 is configured to receive a remote signal and a brake signal. The brake signal is generated when pressure is applied to a brake pedal. A time instant when the remote signal is received is earlier than a time instant when an ignition signal is generated.

The control module 302 is configured to control, in response to receiving the remote signal carrying the start command and receiving no brake signal, the head unit screen of the vehicle to remain in an off state and control, in response to receiving the remote signal carrying no command and receiving the brake signal, the head unit screen of the vehicle to switch to an on state.

Therefore, in the embodiments of the present disclosure, by utilizing the remote signal sent by the wireless control module and the brake signal that are received earlier, it can be quickly determined whether to control the head unit screen of the vehicle to remain in the off state and perform corresponding control, which reduces the occurrence of flickering of the head unit screen and like issues during the remote start in a situation where the head unit screen of the vehicle is required to remain in the off state, thereby reducing potential damage to electronic devices of the vehicle. In addition, in a scenario where the head unit screen of the vehicle is required to switch to the on state, startup time of the head unit screen is reduced, improving user experience.

In an embodiment, the control module 302 applied to the head unit is configured to, in response to receiving the remote signal carrying no command and receiving the brake signal:
output a signal for turning on the head unit screen to the head unit screen, to control the head unit screen to switch to the on state.

In an embodiment, the control module 302 applied to the head unit is further configured to:
control, in response to a first reception module receiving the brake signal after the head unit screen of the vehicle is controlled to remain in the off state, the head unit screen of the vehicle to switch to the on state.

In an embodiment of the present disclosure, the apparatus for controlling a head unit screen of a vehicle further includes: a transmission module applied to a central electronic module. The transmission module is configured to send an ignition signal to the head unit in response to the received brake signal or the remote signal carrying the start command.

In an embodiment of the present disclosure, the apparatus for controlling the head unit screen of the vehicle further includes: an acquisition module applied to the central electronic module and configured to acquire a distance between the vehicle and a key of the vehicle. When the central electronic module receives the brake signal, the transmission module applied to the central electronic module is configured to send, in response to the received brake signal, the ignition signal to the head unit if the distance between the vehicle and the key of the vehicle is less than a preset distance.

In an embodiment, the acquisition module applied to the central electronic module is configured to receive a wireless signal from the key of the vehicle and determine, based on the wireless signal, the distance between the vehicle and the key of the vehicle.

In addition, a vehicle is provided in the present disclosure, and the above-described method for controlling a head unit screen of a vehicle is applied to the vehicle.

It should be noted that the embodiments of the present disclosure are described in a progressive manner. The same and similar parts of the embodiments can be referred to each other. Each of the embodiments focuses on the differences from the other embodiments. In particular, the apparatus and vehicle embodiments are virtually similar to the method embodiments, and therefore are described relatively briefly. For relevant details, reference can be made to the corresponding description of the method embodiment. The apparatus and vehicle embodiments described above are only illustrative, in which the units described as separate components may be or may not be physically separated, and the components shown as units may be or may not be physical units, that is, may be located in one place, or distributed over multiple network elements. Some or all of the modules may be selected as needed to achieve the objective of the solution according to the embodiments. Those skilled in the art can understand and implement the present disclosure without creative effort.

Described above are only embodiments of the present disclosure, and a protection scope of the present disclosure is not limited to these embodiments. Any modification or replacement that can be easily conceived by those skilled in the art within the technical scope disclosed herein shall fall within a protection scope of the present disclosure. Therefore, the protection scope of the present disclosure is subject to a scope of the claims.

## Claims

1. A method for controlling a head unit screen of a vehicle, **characterized in** comprising:
detecting, by a head unit, reception of a remote signal and a brake signal, wherein the brake signal is generated when pressure is applied to a brake pedal, and a time instant when the remote signal is received is earlier than a time instant when an ignition signal is generated; and
controlling, in response to the head unit receiving the remote signal carrying a start command and receiving no brake signal, the head unit screen of the vehicle to remain in an off state, and controlling, in response to the head unit receiving the remote signal carrying no command and receiving the brake signal, the head unit screen of the vehicle to switch to an on state.

2. The method according to claim 1, **characterized in that** the controlling, in response to the head unit receiving the remote signal carrying no command and receiving the brake signal, the head unit screen of the vehicle to switch to the on state comprises:
outputting to the head unit screen, in response to the head unit receiving the remote signal carrying no command and receiving the brake signal, a signal for turning on the head unit screen, to control the head unit screen to switch to the on state.

3. The method according to claim 1, **characterized in that** after the controlling, in response to the head unit receiving the remote signal carrying the start command and receiving no brake signal, the head unit screen of the vehicle to remain in the off state, the method further comprises:
controlling, in response to the head unit receiving the brake signal, the head unit screen of the vehicle to switch to the on state.

4. The method according to claim 1, **characterized in** further comprising:
sending, by a central electronic module, the ignition signal to the head unit in response to the received brake signal or the received remote signal carrying the start command, wherein the ignition signal is for lighting up the head unit screen in the on state.

5. The method according to claim 4, **characterized in that** after the central electronic module receives the brake signal and before the central electronic module sends the ignition signal to the head unit, the method further comprises:
acquiring, by the central electronic module, a distance between the vehicle and a key of the vehicle;
wherein the sending, by the central electronic module, the ignition signal to the head unit in response to the received brake signal or the received remote signal carrying the start command comprises:
in response to the brake signal, sending, by the central electronic module, the ignition signal to the head unit in response to the distance between the vehicle and the key of the vehicle being less than a preset distance.

6. The method according to claim 5, **characterized in that** the acquiring, by the central electronic module, the distance between the vehicle and the key of the vehicle comprises:
receiving, by the central electronic module, a wireless signal from the key of the vehicle; and
determining, by the central electronic module, the distance between the vehicle and the key of the vehicle based on the wireless signal.

7. An apparatus for controlling a head unit screen of a vehicle, **characterized in** comprising a detection module and a control module that are applied to a head unit, wherein
the detection module is configured to detect reception of a remote signal and a brake signal, wherein the brake signal is generated when pressure is applied to a brake pedal, and a time instant when the remote signal is received is earlier than a time instant when an ignition signal is generated;
the control module is configured to control, in response to receiving the remote signal carrying a start command and receiving no brake signal, the head unit screen of the vehicle to remain in an off state, and control, in response to receiving the remote signal carrying no command and receiving the brake signal, the head unit screen of the vehicle to switch to an on state.

8. The apparatus according to claim 7, **characterized in that** the control module is configured to, in response to receiving the remote signal carrying no command and receiving the brake signal:
output a signal for turning on the head unit screen to the head unit screen, to control the head unit screen to switch to the on state.

9. The apparatus according to claim 7, **characterized in that** the control module is further configured to:
control, in response to a first reception module receiving the brake signal after the head unit screen of the vehicle is controlled to remain in the off state, the head unit screen of the vehicle to switch to the on state.

10. A vehicle, **characterized in that** the vehicle applies the method for controlling a head unit screen according to any one of claims 1 to 6.
